**Europäisches Patentamt**

**European Patent Office**

**Office européen des brevets**

(11) Veröffentlichungsnummer: **0 489 362 A1**

# EUROPÄISCHE PATENTANMELDUNG

(21) Anmeldenummer: **91120456.8**

(51) Int. Cl.5: **B62B 3/00**

(22) Anmeldetag: **28.11.91**

(30) Priorität: **05.12.90 DE 9016518 U**

(43) Veröffentlichungstag der Anmeldung:
**10.06.92 Patentblatt 92/24**

(84) Benannte Vertragsstaaten:
**DE ES FR GB IT SE**

(71) Anmelder: **Wanzl GmbH & Co.**
**Entwicklungs-KG**
**Postfach 11 29**
**W-8874 Leipheim(DE)**

(72) Erfinder: **Schmid, Johann**
**Flurstrasse 7**
**W-8949 Derndorf(DE)**
Erfinder: **Wanzl, Rudolf**
**Sonnenweg 8**
**W-8874 Leipheim(DE)**

(54) **Fahrbares Transportgestell.**

(57) Die Erfindung beschreibt ein fahrbares Transportgestell (1) mit einem trapezförmigen Fahrgestell (2), mit einem nach oben verschwenkbaren Boden (14), mit zwei nach oben gerichteten Trägern (12), an denen je eine Seitenwand (13) verschwenkbar angelenkt ist und wahlweise mit einer Rückwand, mit Zwischenfächern und wenigstens einer Vorderwand, wobei auch ein Abdeckteil vorgesehen sein kann. Bekannte Transportgestelle (1) lassen sich von einem mit zwei Gabelzinken (26) ausgestatteten Hubgerät, z.B. von einem Gabelstapler nur dann anheben und transportieren, wenn die Gabelzinken (26) die beiden Längsseiten (9) des Fahrgestelles (2), also quer zur Schieberichtung gerichtet, unterfahren. Um das Unterfahren des Fahrgestelles (2) zum Zwecke des Transportierens des Transportgestelles (1) auch entlang der Schieberichtung zu ermöglichen, wird vorgeschlagen, an der Rückseite (15) des Bodens (14) wenigstens ein nach unten weisendes Stützteil (19) vorzusehen und die untere Begrenzung (20) des Stützteiles (19) in Gebrauchslage des Bodens (14) sowie die unteren Begrenzungen (22) zumindest der kürzeren parallelen Seite (6) des Fahrgestelles (2) auf einer gemeinsamen horizontalen Ebene (23) anzuordnen.

Fig. 2

Die Erfindung betrifft ein fahrbares Transportgestell, das mit gleichen Transportgestellen platzsparend ineinanderschiebbar ist, mit einem von oben betrachtet trapezförmigen, mit Fahrrollen ausgestatteten Fahrgestell, dessen kürzere parallele Seite den vorderen Bereich des Fahrgestelles bildet und dessen längere parallele Seite entweder fehlt oder höher angeordnet ist, als die kürzere parallele Seite und als die beiden Längsseiten des Fahrgestelles und bei dem im rückwärtigen Bereich des Fahrgestelles und an jeder Längsseite ein nach oben gerichteter Träger vorgesehen und an jedem Träger eine um eine vertikale Achse verschwenkbare Seitenwand angelenkt ist, ferner mit einem auf dem Fahrgestell aufliegenden, oder an den Seitenwänden eingehängten und von den Seitenwänden begrenzten Boden, dessen höher als die kürzere parallele Seite und als die Längsseiten des Fahrgestelles angeordnete Rückseite zwischen den Trägern vorgesehen ist und der Boden um eine quer zur Schieberichtung des Transportgestelles befindliche waagrechte Achse, die im rückwärtigen Bereich des Fahrgestelles angeordnet ist, nach oben in eine Nichtgebrauchslage verschwenkbar ist und wahlweise wenigstens eine an einer Seitenwand angelenkte Vorderwand und/oder wenigstens ein über dem Boden angeordnetes Zwischenfach vorgesehen sind, ferner wahlweise mit einer die Träger verbindenden, ortsfest angeordneten Rückwand und schließlich bedarfsweise mit einem das Transportgestell nach oben abschließenden Abdeckteil, wobei zum Zwecke des platzsparenden Ineinanderschiebens mehrerer Transportgestelle der Boden sowie das wenigstens eine Zwischenfach und das Abdeckteil in eine vertikale Nichtgebrauchslage bewegbar und die Seitenwände nach innen verschwenkbar angeordnet sind.

Die US-Patentschrift 3,840,242 beschreibt ein derartiges Transportgestell. Es ist insbesondere zum Transport von Ware für Selbstbedienungsgeschäfte vorgesehen. Dies geschieht in der Regel so, daß Tranportgestelle in Auslieferungslagern mit der Ware beladen, anschließend mit LKW's zu den einzelnen Märkten gefahren und dort beladen werden. Nach dem Entladen werden zumindest die Seitenwände und der Boden, erforderlichenfalls auch die Vorderwand, die Zwischenfächer und das Abdeckteil in eine platzsparende Nichtgebrauchslage gebracht, damit mehrere Transportgestelle platzsparend ineinandergeschoben werden können. Der Platzbedarf einer Anzahl ineinandergeschobener Transportgestelle ist demnach kleiner, als der Platzbedarf einer gleichen Anzahl beladener Transportgestelle. LKW's sind dadurch in der Lage, nicht nur die ineinandergeschobenen Transportgestelle als Leergut, sondern auf der verbliebenen Laderestfläche noch andere Ware, Gegenstände usw. mitzutransportieren. Um die Verladezeiten beladener Transportgestelle zu verkürzen, ist es vorteilhaft, Transportgestelle so zu gestalten, daß sie von den Zinken eines Gabelstaplers unterfahren, angehoben und vom Gabelstapler transportiert werden können. Bei bisher bekannten gattungsgemäßen Transportgestellen, so auch beim Transportgestell entsprechend der vorab genannten US-Patentschrift, ist dieses Unterfahren jedoch in sicherer Weise nur quer zur Schieberichtung des Transportgestelles möglich, da die Zinken eines Gabelstaplers nur an der Unterseite der auf einer gemeinsamen horizontalen Ebene befindliche Längsholme des Fahrgestelles und quer zu deren Längserstreckung sicher angesetzt werden können. Alle anderen denkbaren Auflagestellen hingegen, beispielsweise solche am Boden des Transportgestelles oder an anderen am Fahrgestell befindlichen Bereichen liegen auf unterschiedlichen Höhen. Der Versuch, das Transportgestell unter Inanspruchnahme dieser Auflagestellen anzuheben, könnte ein Umstürzen des Transportgestelles bewirken.

Die Aufgabe der Erfindung besteht darin, ein gattungsgemäßes fahrbares Transportgestell so weiterzuentwickeln, daß es in Gebrauchslage seines Bodens von der Trageinrichtung eines Gabelstaplers nicht nur quer, sondern auch parallel zur Schieberichtung des Transportgestelles, also von vorne oder von hinten unterfahren und vom Gabelstapler sicher transportiert werden kann. Das Transportgestell soll ferner bei Nichtgebrauchslage des Bodens wieder platzsparend ineinanderschiebbar sein.

Die Aufgabe ist erfindungsgemäß dadurch gelöst, daß an der Rückseite des Bodens wenigstens ein nach unten weisendes Stützteil angeordnet ist und die untere Begrenzung des Stützteiles in Gebrauchslage des Bodens sowie die unteren Begrenzungen zumindest der kürzeren parallelen Seite des Fahrgestelles auf einer gemeinsamen horizontalen Ebene angeordnet sind und daß in Nichtgebrauchslage des Bodens die untere Begrenzung des wenigstens einen Stützteiles höher angeordnet ist, als die obere Begrenzung zumindest der kürzeren parallelen Seite des Fahrgestelles.

Nun ist wohl durch die deutsche Offenlegungsschrift 20 21 914 ein gattungsähnliches Transportgestell bekannt, das zumindest in Schieberichtung von den Zinken eines Gabelstaplers unterfahren und angehoben werden kann. Im Gegensatz zum erfindungsgemäßen Transportgestell weist dieses Transportgestell jedoch anstelle eines trapezförmigen Fahrgestelles ein Z-förmiges Fahrgestell auf, an dessen parallelen Seiten je eine Seitenwand unverschwenkbar befestigt ist. Der Boden des Transportgestelles ist um eine waagrechte Achse an einer der beiden Seitenwände nach oben verschwenkbar gelagert. Der Boden stützt sich mit seiner gegenüberliegenden Seite an der anderen Seitenwand ab. Um den Boden in die Gebrauchslage absenken zu können, weist dieser diagonal angeordnete Aussparungen auf, in welche ein diagonal angeordneter, die beiden parallelen Seiten des Fahrgestelles verbindender Schrägholm zu liegen kommt. Der als Platte gestaltete Boden weist an seiner Unterseite zwei Stütz- und zwei Tragholme auf, die in rechten Winkeln angeordnet sind und deren Unterkanten sich in der Ebene der Unterkanten des Fahrgestelles befinden. Um ein sicheres Anheben des Transportgestelles zu garantieren, müssen ferner zwei Diagonalholme vorgesehen sein, welche jeweils einen Stützholm und einen Tragholm verbinden, wobei die Unterkanten der Diagonalholme ebenfalls auf der Ebene der Unterkanten des Fahrgestelles liegen. Im Gegensatz zur erfindungsgemäßen Lösung, die mit lediglich einem Stützteil auskommt, benötigt dieses Transportgestell wenigstens sechs Stützteile, die an der Unterseite des Bodens befestigt sind. Um ein Anheben dieses Transportgestelles mit Hilfe eines Gabelstaplers zu ermöglichen, ist demnach ein enormer Bauteileaufwand erforderlich. Dies ist nachteilig. Wollte man diesen Bauteileaufwand im Sinne der vorliegenden Erfindung reduzieren, ließe sich das erwähnte Transportgestell nicht anheben, da zu wenig Stützauflagen vorhanden wären.

Der Vorteil der Erfindung besteht darin, daß durch das wenigstens eine nach unten weisende Stützteil zusammen mit den Längsseiten und der kürzeren parallelen Seite des Fahrgestelles ein nahezu geschlossener trapezförmiger Auflagebereich für die Trageinrichtung eines Gabelstaplers geschaffen ist. Dadurch ist es in zweckmäßiger Weise möglich, die beiden Gabelzinken der Trageinrichtung von der Rückseite des Transportgestelles aus und in Schieberichtung des Transportgestelles sich bewegend, oder entgegengesetzt, also von vorne aus unter das wenigstens eine Stützteil und unter die kürzere parallele Seite des Fahrgestelles zu fahren. Nach dem Anheben der beiden Gabelzinken liegen die kürzere parallele Seite und das wenigstens eine Stützteil auf den Gabelzinken auf. Die Trageinrichtung eines Gabelstaplers kann somit das gesamte Traggestell, ob beladen oder unbeladen, sicher anheben, transportieren und wieder absenken. Das Traggestell kann nicht kippen, da die unteren Begrenzungen des wenigstens einen Stützteiles und der kürzeren parallelen Seite des Fahrgestelles Bestandteil einer gemeinsamen horizontalen Ebene sind. Befindet sich der Boden in Gebrauchslage, können zwei gleiche Transportgestelle nicht platzsparend ineinandergeschoben werden, weil die kürzere parallele Seite des Fahrgestelles eines rückwärtigen Transportgestelles an das wenigstens eine Stützteil eines vorausbefindlichen Transportgestelles anstößt. Ein Ineinanderschieben zweier Transportgestelle, deren Böden sich in Gebrauchslage befinden, ist im Grunde jedoch uninteressant, da die Transportgestelle in diesem Zustand gewöhnlich beladen sind. Da die Transportgestelle nur in unbeladenem Zustand ineinandergeschoben werden können und da zu diesem Zweck deren Böden hochgeklappt sein müssen, hat es sich ferner als vorteilhaft erwiesen, daß das wenigstens eine Stützteil beim Hochschwenken des ihm zugeordneten Bodens gleichzeitig auch aus jenem Bereich herausgeschwenkt wird, den die kürzere parallele Seite sowie Teile der Längsseiten des Fahrgestelles eines rückwärtigen Transportgestelles dann beanspruchen, wenn dieses in ein vorausbefindliches Transportgestell eingeschoben wird. Das wenigstens eine Stützteil verliert in diesem Falle seine Stützfunktion, die es in hochgeschwenktem Zustand des Bodens ohnehin nicht ausüben kann. Umgekehrt nimmt beim Nachuntenschwenken des Bodens in die Gebrauchslage das wenigstens eine Stützteil wieder jene Lage ein, in der es seine Stützfunktion erfüllen kann.

Gemäß einer Ausgestaltung der Erfindung ist es zweckmäßig, zwischen der kürzeren parallelen Seite des Fahrgestelles und dem wenigstens einen Stützteil eine weitere Querstrebe vorzusehen, welche die Längswände des Fahrgestelles verbindet. Die untere Begrenzung der Querstrebe ist auf der gleichen horizontalen Ebene angeordnet, wie die unteren Begrenzungen des wenigstens einen Stützteiles, der Längswände und der kürzeren parallelen Seite des Fahrgestelles. Die untere Begrenzung der Querstrebe bildet somit eine weitere Auflagefläche für die Gabelzinken eines Gabelstaplers.

Das erfindungsgemäße Transportgestell kann nunmehr von den Gabelzinken eines Gabelstaplers in vorteilhafter Weise von allen vier Seiten unterfahren werden, was bei bisher bekannten gattungsgemäßen Transportgestellen nicht möglich war. Die Erfindung wird anhand eines Ausführungsbeispieles näher erläutert. Es zeigt

Fig. 1    ein Transportgestell in räumlicher Darstellung;

Fig. 2    den unteren Bereich des Transportgestelles in einem Längsschnitt, wobei sich der Boden in der Gebrauchslage befindet sowie

Fig. 3    im gleichen Längsschnitt zwei ineinandergeschobene Transportgestelle.

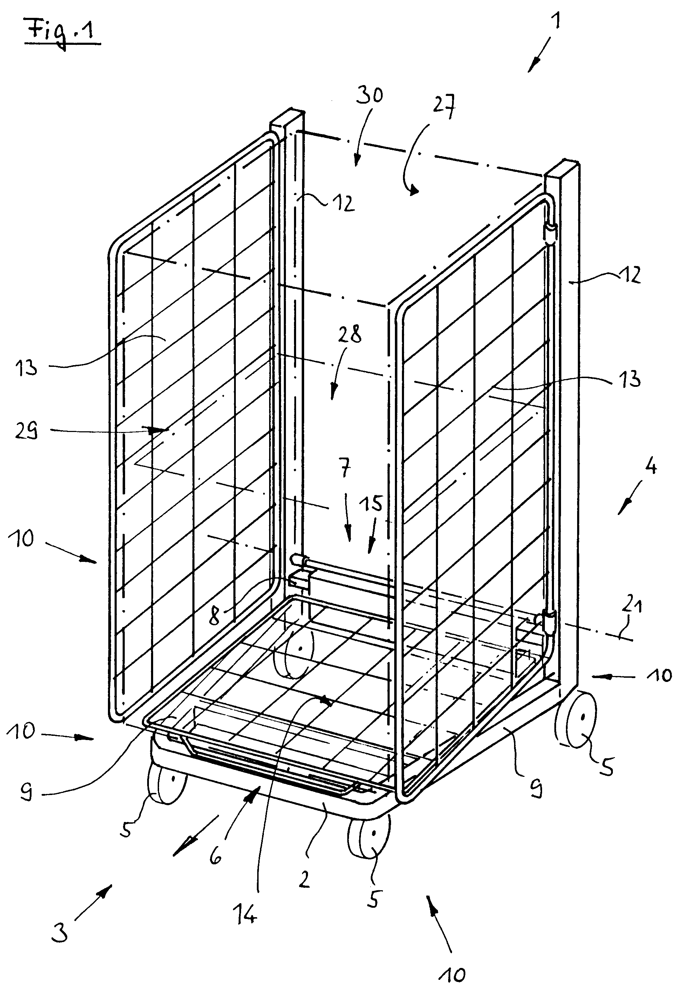

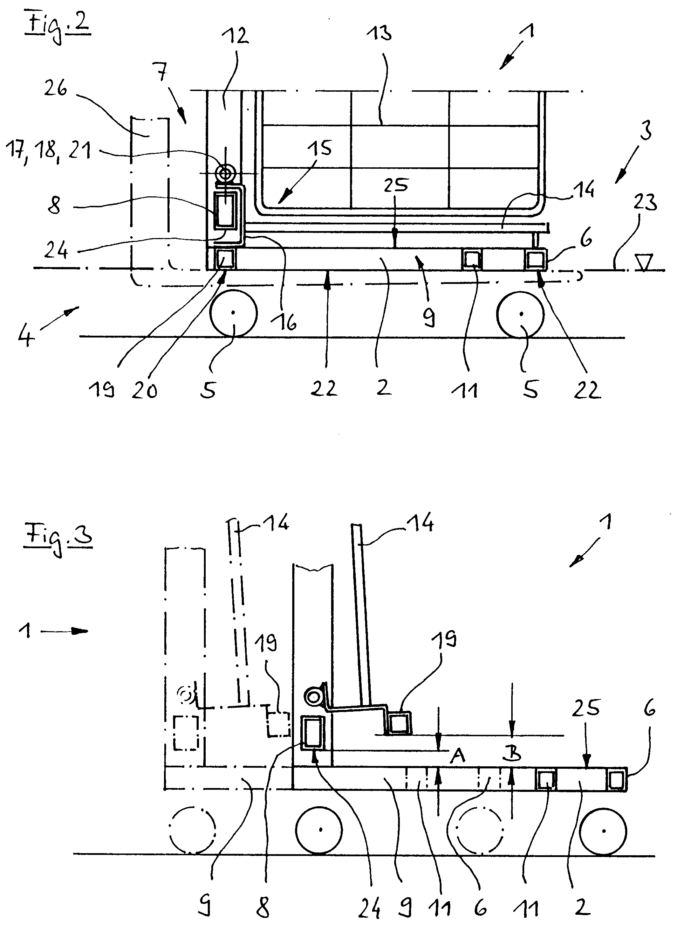

Das in Fig. 1 dargestellte Transportgestell 1 weist ein von oben betrachtet trapezförmiges Fahrgestell 2 auf. Die kürzere parallele Seite 6 bildet den vorderen Bereich 3 des Fahrgestelles 2. Die im rückwärtigen Bereich 4 befindliche längere Seite 7 kann in bekannter Weise durch einen Quersteg 8 (Fig. 2 und 3) gebildet sein. Auf den Quersteg 8 kann je nach Verwendungszweck des Transportgestelles 1 auch verzichtet werden. Die kürzere und längere Seite 6, 7 des Fahrgestelles 2 sind an beiden Enden durch je eine in Schieberichtung (Pfeil) des Transportgestelles 1 spitz zulaufend angeordnete Längsseite 9 verbunden. Bevorzugt an den vier Eckpunkten 10 des trapezförmigen Fahrgestelles 2 ist je eine Fahrrolle 5 montiert. Im rückwärtigen Bereich 4 des Fahrgestelles 2 und an jeder Längsseite 9 ist ein nach oben gerichteter Träger 12 am Fahrgestell 2 angeschweißt oder angeschraubt. Jeder Träger 12 kann durch ein Rohr mit bevorzugt rechteckigem Querschnitt gestaltet sein. Es ist aber in Anlehnung an die eingangs erwähnte US-Patentschrift möglich, jeden Träger 9 aus mindestens zwei Rohren, die durch Zwischenstücke verbunden sein können, zu gestalten. Das Fahrgestell 2 und die Träger 12 bilden eine starre Baueinheit. Lediglich die Fahrrollen 5 sind beweglich. An jedem Träger 9 ist in bekannter Weise eine um eine vertikale Achse verschwenkbare Seitenwand 13 angelenkt. Auf dem Fahrgestell 2 liegt ein Boden 14 auf, der von den Seitenwänden 13 begrenzt ist und dessen Rückseite 15 zwischen den Trägern 9 angeordnet ist, wobei der Boden 14 in ebenfalls bekannter Weise um eine quer zur Schieberichtung des Transportgestelles 1 befindliche waagrechte Achse 21, die im rückwärtigen Bereich 4 des Fahrgestelles 2 angeordnet ist, nach oben in eine Nichtgebrauchslage und wieder zurück nach unten in die Gebrauchslage verschwenkbar gelagert ist. Der schwenkbar gelagerte Boden 14 kann in bekannter Weise mit seinem vorderen Bereich, seitlich auch an den Seitenwänden 13 eingehängt sein. Die bis hierher beschriebenen konstruktiven Einzelheiten gehören zur Minimaloder Grundausstattung des Transportgestelles 1. Im Regelfall weist das Transportgestell 1 eine Rückwand 27 auf, die bevorzugt gitterförmig gestaltet, zwischen den beiden Trägern 9 angeordnet und an diesen befestigt ist. Des weiteren kann über dem Boden 14 wenigstens ein Zwischenfach 28 vorgesehen sein, wobei jedes Zwischenfach 28 entweder an einer Seitenwand 13 oder an der Rückwand 27 angelenkt ist und nach oben oder nach unten in eine Nichtgebrauchslage verschwenkt werden kann. Ebenso ist es in bekannter Weise möglich, entweder an einer der beiden Seitenwände 13 eine Vorderwand 29 oder an je einer Seitenwand 13 je eine Vorderwandhälfte um je eine vertikale Achse verschwenkbar anzuordnen. Schließlich kann im Bedarfsfalle, besonders dann, wenn das Transportgestell 1 allseits umschlossen sein soll, ein Abdeckteil 30 vorgesehen werden, das in ebenfalls bekannter Weise an einer der vier Wände (Seiten-, Vorder- oder Rückwand 13, 29, 27) um eine horizontale Achse verschwenkbar angelenkt ist. Die wenigstens eine Vorderwand 29, die Rückwand 27, das mindestens eine Zwischenfach 28 sowie das Abdeckteil 30 -alle diese Teile in der Zeichnung strichpunktiert gezeichnet- können unterschiedlich wahlweise verwendet werden, ohne den erfindungsgemäßen Gedanken der Erfindung zu verlassen.

Fig. 2 zeigt den unteren Bereich des Transportgestelles 1 in einem Längsschnitt. Die Fahrrollen 5 tragen das Fahrgestell 2. In der Zeichnung erkennt man die in Schieberichtung des Transportgestelles 1 links angeordnete Längsseite 9 des Fahrgestelles 2. Im vorderen Bereich 3 des Fahrgestelles 2 befindet sich die kürzere parallele Seite 6. Im rückwärtigen Bereich 4 des Fahrgestelles 2 kann die längere parallele Seite 7 des Fahrgestelles 2 durch einen die Träger 9 verbindenden Quersteg 8 gebildet sein, dessen untere Begrenzung 24 höher angeordnet ist, als die obere Begrenzung 25 der Längsseiten 9, der kürzeren parallelen Seite 6 sowie einer Querstrebe 11, die zwischen der kürzeren parallelen Seite 6 und dem Quersteg 8 im vorderen Bereich 3 des Fahrgestelles 2 angeordnet sein kann und die Längsseiten 9 verbindet. Über dem Fahrgestell 2 angeordnet erkennt man einen Teil einer Seitenwand 13. Man erkennt ferner einen Teil des linken Trägers 12, an dem die Seitenwand 13 verschwenkbar angelenkt ist. Über dem Quersteg 8 ist auf der waagrechten Achse 21, welche zwischen den Trägern 12 angeordnet ist, der Boden 14 verschwenkbar gelagert. In der Zeichnung ist der Boden 14 in Gebrauchslage dargestellt. Der Boden 14 weist an seiner Rückseite 15 ein Winkelstück 16 auf, das am Quersteg 8 vorbeigeführt, beidseitig an seinem oberen Bereich je eine Buchse 17 trägt. An den Trägern 12 befinden sich zueinander gerichtete, an die Träger 12 anschraubbare und auf der waagrechten Achse 21 angeordnete Zapfen 18, auf welchen die Buchsen 17 und damit der Boden 14 verschwenkbar gelagert ist. Im unteren Bereich des Winkelstückes 16 und zwischen den Trägern 12 angeordnet ist wenigstens ein rohrförmiges Stützteil 19 am Winkelstück 16 angeschweißt. Das wenigstens eine Stützteil 19 weist so weit nach unten, daß die untere Begrenzung 20 des wenigstens einen Stützteiles 19 zusammen mit der unteren Begrenzung 22 zumindest der kürzeren parallelen Seite 6, bevorzugt aber auch mit der unteren Begrenzung 22 der Längsseiten 9 und/oder der Querstrebe 11 auf einer gemeinsamen horizontalen Ebene 23 angeordnet sind. Die Ebene 23 ist durch eine strichpunktierte, mit einem Niveauzeichen versehene Linie dargestellt. Weiter sind strichpunktiert und deckungsgleich zwei Gabelzinken 26 eines Gabelstaplers oder entsprechenden Hubgerätes eingezeichnet, die das wenigstens eine Stützteil 19, wahlweise die Querstrebe 11 und die kürzere parallele Seite 6 als Auflageflächen benützend im Begriff sind, das Transportgestell 1 anzuheben. Dadurch, daß die untere Begrenzung 20 des wenigstens einen Stützteiles 19 senkrecht unter der waagrechten Achse 21 angeordnet ist, entstehen durch das Anheben mit den Gabelzinken 26 keine Drehmomente, welche ein Verschwenken des Bodens 14 beim Anheben des Transportgestelles 1 bewirken könnten.

Die Erfindung läßt auch ein Transportgestell 1 zu, bei dem die untere Begrenzung 22 der beiden Längsseiten 9 nicht auf der Ebene 23, sondern tiefer oder höher als die Ebene 23 angeordnet ist.

Fig. 3 zeigt zwei Transportgestelle 1 mit nach oben geklapptem Boden 14 in ineinandergeschobener Lage. Das Maß A verdeutlicht, daß die untere Begrenzung 24 des Quersteges 8 höher angeordnet ist, als die obere Begrenzung 25 der Längsseiten 9, der Querstrebe 11 und der kürzeren parallelen Seite 6 des Fahrgestelles 2. In der Zeichnung erkennt man ferner, daß durch das Nachobenschwenken des Bodens 14 das wenigstens eine Stützteil 19 ebenfalls nach oben geschwenkt ist und durch das Maß B gekennzeichnet, ebenfalls höher angeordnet ist, als die obere Begrenzung 25 der kürzeren parallelen Seite 6, der Querstrebe 11 und der Längsseiten 9. Dadurch ist es möglich, mehrere Transportgestelle 1 platzsparend ineinanderzuschieben, weil die Fahrgestelle 2 konisch gestaltet sind und weil die kürzere parallele Seite 6, die Querstrebe 11 und ein Großteil der Längsseiten 9 eines rückwärtigen Transportgestelles 1 unter dem Quersteg 8 und dem wenigstens einen Stützteil 19 eines vorausbefindlichen Transportgestelles 1 hindurchgeschoben werden können.

Wie bereits in der Beschreibung zu Fig. 2 angedeutet, kann auf einen die beiden Träger 12 verbindenden Quersteg 8 auch verzichtet werden. Dies ist bei Transportgestellen 1 dann möglich, wenn sie relativ wenig belastet werden. In solchen Fällen ist das Winkelstück 16 nicht erforderlich. Vielmehr sind Lösungen denkbar, die entweder darin bestehen, daß das wenigstens eine Stützteil 19 an der Rückseite 15 des Bodens 14 und zwischen den Trägern 12 vorgesehen, senkrecht unterhalb der waagrechten Achse 21 an der Unterseite des Bodens 14 angeordnet ist, oder daß von der waagrechten Achse 21 aus ein Steg nach unten führt, der etwa auf halbem Wege mit dem Boden 14 verbunden und mit seinem unteren Bereich mit dem wenigstens einen nach unten weisenden Stützteil 19 ebenfalls verbunden ist. In letzterem Falle wird das Winkelstück 16 durch einen vertikal angeordneten, nicht näher dargestellten Steg ersetzt. Bei beiden Ausführungsbeispielen weist das wenigstens eine Stützteil 19 so weit nach unten, daß die untere Begrenzung 20 des wenigstens einen Stützteiles 19 zusammen mit der unteren Begrenzung 22 zumindest der kürzeren parallelen Seite 6, gewöhnlich aber auch mit der unteren Begrenzung 22 der Längsseiten 9 und der Querstrebe 11 auf einer gemeinsamen horizontalen Ebene 23 angeordnet sind.

Aus Gründen einer deutlichen Darstellung der Erfindung ist darauf verzichtet worden, in welche Lage die beiden Seitenwände 13 und erforderlichenfalls das wenigstens eine Zwischenfach 28 sowie die mindestens eine Vorderwand 29 zu bringen sind, um Transportgestelle 1 platzsparend ineinanderschieben zu können. Die Erfindung lehnt sich in diesen Fällen an bekannte Lösungen an, wonach diese Teile in eine platzsparende Lage geschwenkt oder gefaltet werden, wie dies z.B. in der eingangs erwähnten US-Patentschrift in Fig. 2 gezeigt ist. Gleiches gilt auch für jene Mittel, die zur Befestigung oder Arretierung für die Seitenwände 13, des Bodens 14, des wenigstens einen Zwischenfaches 28, der mindestens einen Vorderwand 29 und des Abdeckteiles 30 erforderlich sind. Auf eine detaillierte Beschreibung dieser Einzelheiten kann deshalb verzichtet werden.

## Patentansprüche

1. Fahrbares Transportgestell, das mit gleichen Transportgestellen platzsparend ineinanderschiebbar ist, mit einem von oben betrachtet trapezförmigen, mit Fahrrollen ausgestatteten Fahrgestell, dessen kürzere parallele Seite den vorderen Bereich des Fahrgestelles bildet und dessen längere parallele Seite entweder fehlt oder höher angeordnet ist, als die kürzere parallele Seite und als die beiden Längsseiten des Fahrgestelles und bei dem im rückwärtigen Bereich des Fahrgestelles und an jeder Längsseite ein nach oben gerichteter Träger vorgesehen und an jedem Träger eine um eine vertikale Achse verschwenkbare Seitenwand angelenkt ist, ferner mit einem auf dem Fahrgestell aufliegenden, oder an den Seitenwänden eingehängten und von den Seitenwänden begrenzten Boden, dessen höher als die kürzere parallele Seite und als die Längsseiten des Fahrgestelles angeordnete Rückseite zwischen den Trägern vorgesehen ist und der Boden um eine quer zur Schieberichtung des Transportgestelles befindliche waagrechte Achse, die im rückwärtigen Bereich des Fahrgestelles angeordnet ist, nach oben in eine Nichtgebrauchslage verschwenkbar ist und wahlweise wenigstens eine an einer Seitenwand angelenkte Vorderwand und/oder wenigstens ein über dem Boden angeordnetes Zwischenfach vorgesehen sind, ferner wahlweise mit einer die Träger verbindenden, ortsfest angeordneten Rückwand und schließlich bedarfsweise mit einem das Transportgestell nach oben abschließenden Abdeckteil, wobei zum Zwecke des platzsparenden Ineinanderschiebens mehrerer Transportgestelle der Boden sowie das wenigstens eine Zwischenfach und das Abdeckteil in eine vertikale Nichtgebrauchslage bewegbar und die Seitenwände nach innen verschwenkbar angeordnet sind, dadurch gekennzeichnet, daß an der Rückseite (15) des Bodens (14) wenigstens ein nach unten weisendes Stützteil (19) angeordnet ist und die untere Begrenzung (20) des Stützteiles (19) in Gebrauchslage des Bodens (14) sowie die unteren Begrenzungen (22) zumindest der kürzeren parallelen Seite (6) des Fahrgestelles (2) auf einer gemeinsamen horizontalen Ebene (23) angeordnet sind und daß in Nichtgebrauchslage des Bodens (14) die untere Begrenzung (20) des wenigstens einen Stützteiles (19) höher angeordnet ist, als die obere Begrenzung (25) zumindest der kürzeren parallelen Seite (6) des Fahrgestelles (2).

2. Fahrbares Transportgestell nach Anspruch 1, dadurch gekennzeichnet, daß sich die unteren Begrenzungen (22) der Längsseiten (9) und/oder die untere Begrenzung (22) einer die Längsseiten (9) verbindenden Querstrebe (11) ebenfalls auf der Ebene (23) befinden.

3. Fahrbares Transportgestell nach den Ansprüchen 1 und/oder 2, dadurch gekennzeichnet, daß in Nichtgebrauchslage des Bodens (14) die untere Begrenzung (20) des wenigstens einen Stützteiles (19) höher angeordnet ist, als die obere Begrenzung (25) der Längsseiten (9) und/oder der Querstrebe (11).

4. Fahrbares Transportgestell nach einem oder mehreren der Ansprüche 1 bis 3, dadurch gekennzeichnet, daß die waagrechte Achse (21) über einem die Träger (12) verbindenden Quersteg (8) angeordnet ist.

5. Fahrbares Transportgestell nach einem oder mehreren der Ansprüche 1 bis 4, dadurch gekennzeichnet, daß die untere Begrenzung (20) des wenigstens einen Stützteiles (19) senkrecht unter der waagrechten Achse (21) angeordnet ist.

6. Fahrbares Transportgestell nach einem oder mehreren der Ansprüche 1 bis 5, dadurch gekennzeichnet, daß der Boden (14) an seiner Rückseite (15) ein auf der waagrechten Achse (21) gelagertes Winkelstück (16) aufweist, das am Quersteg (8) vorbeigeführt ist, wobei das Winkelstück (16) das wenigstens eine Stützteil (19) trägt.

7. Fahrbares Transportgestell nach einem oder mehreren der Ansprüche 1 bis 5, dadurch gekennzeichnet, daß der Boden (14) an seiner Rückseite (15) einen auf der waagrechten Achse (21) gelagerten Steg aufweist, der das wenigstens eine Stützteil (19) trägt.

8. Fahrbares Transportgestell nach einem oder mehreren der Ansprüche 1 bis 7, dadurch gekennzeichnet, daß die untere Begrenzung (22) der Längsseiten (9) tiefer oder höher angeordnet ist, als die Ebene (23).

9. Fahrbares Transportgestell nach einem oder mehreren der Ansprüche 1 bis 8, dadurch gekennzeichnet, daß die unteren Begrenzungen (20) des wenigstens einen Stützteiles (19) und der kürzeren parallelen Seite (6) und wahlweise die unteren Begrenzungen (22) der Querstrebe (11) und der Längsseiten (9) als Auflageflächen für die Gabelzinken (26) eines Hubgerätes (Gabelstaplers) vorgesehen sind.

Fig. 1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 505 910 (WANZL METALLWARENFABRIK KG) * Seite 13, Zeile 3 - Seite 13, Zeile 15; Abbildungen * --- | 1-9 | B62B3/00 |
| A | GB-A-2 215 679 (THE BOC GROUP PLC) * Seite 2, Zeile 10 - Seite 3, Zeile 20; Abbildungen * ----- | 1-5,7-9 | |
| | | | **RECHERCHIERTE SACHGEBIETE (Int. Cl.5)** B62B |

Der vorliegende Recherchenbericht wurde für alle Patentansprüche erstellt

| Recherchenort | Abschlußdatum der Recherche | Prüfer |
|---|---|---|
| DEN HAAG | 09 MAERZ 1992 | FRANKS B.G. |